# EUROPÄISCHE PATENTSCHRIFT

(11) **EP 1 736 336 B1**
(45) Veröffentlichungstag und Bekanntmachung des Hinweises auf die Patenterteilung: **02.03.2011**
(21) Anmeldenummer: 06007781.5
(22) Anmeldetag: 13.04.2006
(51) Int. Cl.: B60J 7/00

(54) **Kraftfahrzeug mit verschiebbarem Beschattungssystem und an diesem angebrachter Sonnenblende**
Vehicle with slidable sunshade system and sun visor mounted thereon
Véhicule avec dispositif de protection solaire coulissant et pare-soleil monté dessus

(30) Priorität: 21.06.2005 DE 102005028614
(43) Veröffentlichungstag der Anmeldung: 27.12.2006
(73) Patentinhaber: GM Global Technology Operations, Inc., Detroit, MI 48265-3000 (US)
(72) Erfinder: Ziegler, Hendrik, 64347 Griesheim (DE)
(74) Vertreter: Strauss, Peter

(56) Entgegenhaltungen:
- DE-A1- 10 338 722
- US-A1- 2004 160 082

## Beschreibung

Die Erfindung betrifft ein Kraftfahrzeug mit verschiebbarem Beschattungssystem und an diesem angebrachter Sonnenblende, wobei das Beschattungssystem in Längsrichtung des Fahrzeugs in stationären Führungsschienen verschiebbar gelagert ist, und im vorderen Bereich des Beschattungssystems, zumindest auf der Fahrerseite des Kraftfahrzeugs, die Sonnenblende angeordnet ist, die um eine im wesentlichen horizontale, quer zur Längsachse des Kraftfahrzeugs angeordnete Achse schwenkbar im Beschattungssystem gelagert ist und aus einer im wesentlichen horizontalen Nichtgebrauchslage nach unten in eine Gebrauchslage schwenkbar ist.

Anwendung findet ein solches Beschattungssystem insbesondere bei einem Dach eines Kraftfahrzeugs, das mit einer vergleichsweise großen Windschutzscheibe versehen ist, die sich bis etwa auf Höhe der B-Säule des Fahrzeugs erstreckt. Um eine unerwünschte Sonneneinstrahlung abschatten zu können, ist das Beschattungssystem vorgesehen, das zwischen einer zurückgeschobenen Stellung und einer vorgezogenen Stellung verstellt werden kann. In der zurückgeschobenen Stellung befindet sich ein vorderer Spriegel des Beschattungssystems im Bereich des Übergangs der Windschutzscheibe und dem lichtundurchlässigen Bereich des Fahrzeugdachs, und der eigentliche Sonnenschutz des Beschattungssystems befindet sich unterhalb des lichtundurchlässigen Bereichs des Fahrzeugdachs. In der vorgezogenen Stellung befindet sich der vordere Spriegel in Fahrtrichtung des Fahrzeugs gesehen nach vorn herausgezogen, so dass er in etwa in dem Bereich liegt, in welchem bei herkömmlichen Fahrzeugen die Windschutzscheibe in das Fahrzeugdach übergeht. Der Sonnenschutz deckt den Bereich der Windschutzscheibe ab, der zwischen dem vorderen Spriegel und dem lichtundurchlässigen Bereich des Fahrzeugdachs liegt. Zum Halten des Sonnenschutzes ist das Beschattungssystem in seinem hinteren Bereich vorzugsweise mit einem hinteren Spriegel versehen. Die beiden Spriegel sind in den stationären Führungsschienen verschiebbar gelagert.

Ein Kraftfahrzeug der Eingangs genannten Art ist aus der DE 103 06 951 A1 bekannt. Dort weist das Beschattungssystem im Bereich des vorderen Spriegels zwei Sonnenblenden auf. Eine der beiden Sonnenblenden ist auf der Fahrerseite, die andere der beiden Sonnenblenden auf der Beifahrerseite des Kraftfahrzeugs angeordnet. Die Sonnenblenden können, wenn der Spriegel nach vorne gezogen ist, nach unten geklappt werden. Diesen Sonnenblenden kommt damit die Funktion von Sonnenblenden herkömmlicher Kraftfahrzeuge zu.

Nachteilig ist bei dem bekannten Kraftfahrzeug, dass dann, wenn das Beschattungssystem, zum Beispiel durch den Beifahrer, mit nach unten geklappten Sonnenblenden nach hinten verschoben wird, die jeweilige Sonnenblende unweigerlich an den Kopf des vorderen Insassen stößt. Im Fall des Fahrers kann dies zu einer kurzzeitigen Beeinträchtigung seiner Aufmerksamkeit für den Verkehr führen, bedingt somit eine erhöhte Unfallgefährdung.

Aufgabe der Erfindung ist es, das Kraftfahrzeug der Eingangs genannten Art so weiterzubilden, dass ein Kontakt zwischen der heruntergeklappten Sonnenblende und dem Kopf des Insassen beim Verschieben des Beschattungssystems vermieden wird.

Gelöst wird die Aufgabe bei einem Kraftfahrzeug der Eingangs genannten Art dadurch, dass mit der Fahrzeugkarosserie ein Element verbunden ist, das, beim Verschieben des Beschattungssystems aus seiner vorderen Endstellung, in den Weg der in Gebrauchslage befindlichen Sonnenblende ragt.

Erfindungsgemäß befindet sich somit das Element im Bewegungsweg der nach unten geklappten Sonnenblende bei deren Verschiebung mittels des Beschattungssystems. Sobald die Sonnenblende, bei einer Bewegung des Beschattungssystems nach hinten, das Element kontaktiert, wird sie entweder nach vorne geschwenkt, aber es blockiert die Sonnenblende die Verschiebung des Beschattungssystems, so dass das Beschattungssystem erst dann weiter verschoben werden kann, wenn die Sonnenblende zuvor hochgeklappt wird. In beiden Fällen wird verhindert, dass die nach unten geklappte Sonnenblende beim Zurückschieben des Beschattungssystems an den Kopf des vorderen Insassen stößt.

Je nach Gestaltung der Lagerung der Sonnenblende klappt das Element die in Gebrauchslage befindliche Sonnenblende nach oben oder bildet bei Kontakt mit der in Gebrauchslage befindlichen Sonnenblende einen Anschlag für das Beschattungssystem.

Es wird als besonders vorteilhaft angesehen, wenn der beim Fahrzeug vorhandene Dachhaltegriff das Element bildet, das beim Verschieben des Beschattungssystems aus seiner vorderen Endstellung in den Weg der in Gebrauchslage befindlichen Sonnenblende ragt. Es handelt sich insbesondere um denjenigen seitlichen Dachhaltegriff, der im Bereich der Beifahrerseite angeordnet ist.

Bevorzugte Weiterbildungen der Erfindung ergeben sich aus den Unteransprüchen und der nachfolgenden Beschreibung.

Nachfolgend wird ein Ausführungsbeispiel der Erfindung, ohne hierauf beschränkt zu sein, unter Bezugnahme auf die Zeichnung näher erläutert. In der Zeichnung zeigt:
- Figur: 1 eine perspektivische Ansicht eines teilweise dargestellten Kraftfahrzeugs, im Bereich des schräg von unten gesehenen Fahrzeugdachs, wobei sich das Beschattungssystem in einer teilweise vorgezogenen Stellung befindet,
- Figur 2: eine perspektivische Ansicht des vorderen Bereiches des Fahrzeuginnenraumes, wobei das Beschattungssystem mit durchgezogenen Linien in seiner nach vorne geschobenen Stellung gezeigt und mit strichlierten Linien in seiner nach hinten geschobenen Stellung angedeutet ist,
- Figur 3: eine Detaildarstellung des Bereichs C in Figur 2 und
- Figur 4: eine Seitenansicht von Beschattungssystem und Fahrzeugkarosserie im Bereich des Dachhaltegriffs und der Sonnenblende.

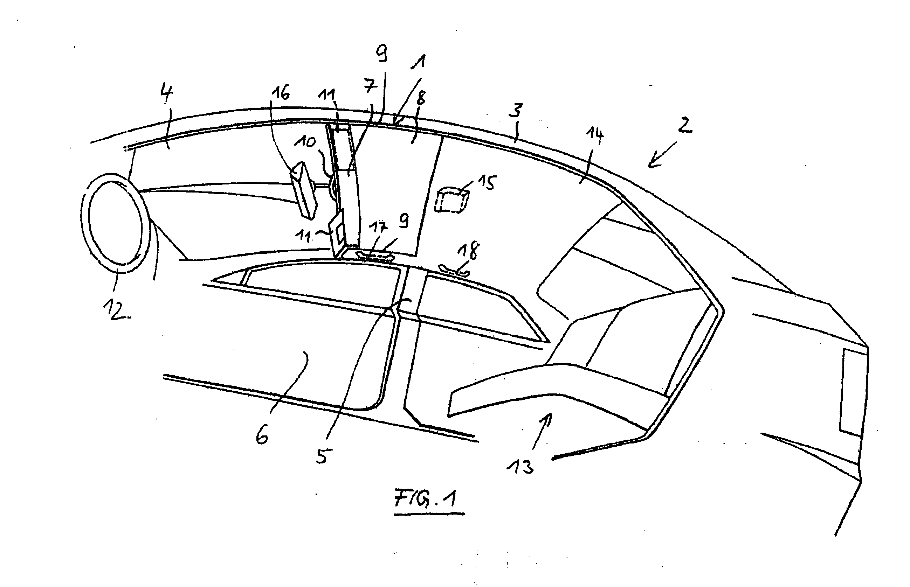

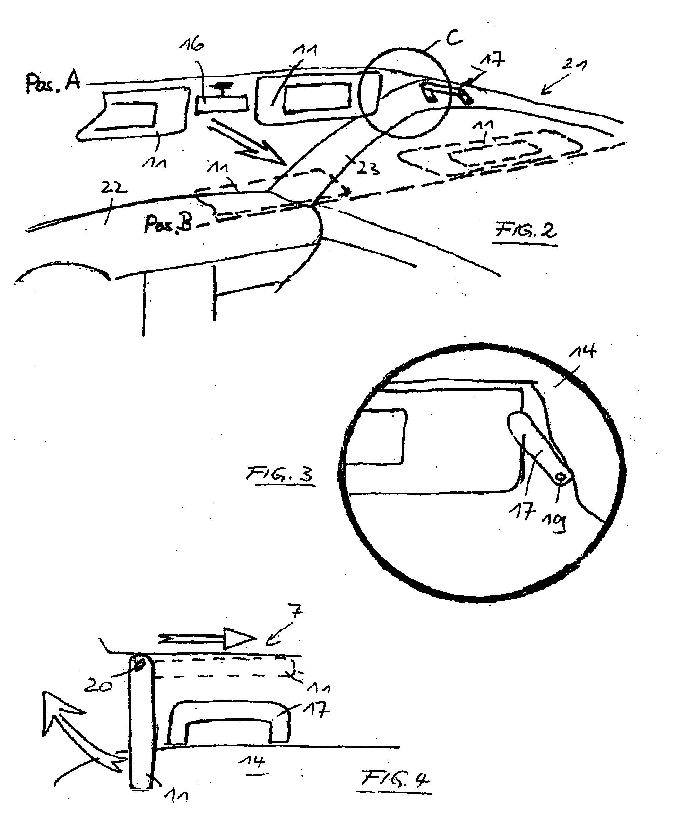

Anhand der Darstellung der Figuren 1 und 2 wird zunächst allgemein das mit dem Beschattungssystem 1 versehene Kraftfahrzeug 2 erläutert. Das Beschattungssystem 1 ist insbesondere zur Anbringung an einem Fahrzeugdach 3, das mit einer vergleichsweise großen Windschutzscheibe 4 versehen ist, vorgesehen. Diese erstreckt sich bis etwa auf Höhe der B-Säule 5 des Fahrzeugs. Mit der Bezugsziffer 6 ist die Beifahrertür bezeichnet. Das Beschattungssystem 1 dient dem Zweck, eine unerwünschte Sonneneinstrahlung abschatten zu können. Vom Beschattungssystem 1 ist ein vorderer Spriegel 7 und der eigentliche Sonnenschutz 8 sichtbar. Der vordere Spriegel 7 kann zwischen der vorgezogenen Stellung A und der zurückgeschobenen Stellung B verstellt werden. In der zurückgeschobenen Stellung des vorderen Spriegels 7 und damit des Sonnenschutzes 8 befindet sich der vordere Spriegel 7 im Bereich des Übergangs zwischen der Windschutzscheibe 4 und dem lichtundurchlässigen Bereich des Fahrzeugdachs 3, und der Sonnenschutz 8 befindet sich unterhalb des lichtundurchlässigen Bereichs des Fahrzeugdachs 3. In der vorgezogenen Stellung ist der vordere Spriegel 7, in Fahrtrichtung des Fahrzeugs gesehen, nach vorn herausgezogen, so dass er etwa in dem Bereich liegt, in welchem bei herkömmlichen Fahrzeugen die Windschutzscheibe in das Fahrzeugdach übergeht. Der Sonnenschutz 8 deckt den Bereich der Windschutzscheibe 4 ab, der zwischen dem vorderen Spriegel 7 und dem lichtundurchlässigen Bereich des Fahrzeugdachs 3 liegt.

An dem dem vorderen Spriegel 7 gegenüberliegenden Rand des Sonnenschutzes 8 ist ein nicht sichtbarer hinterer Spriegel angebracht. Der Sonnenschutz 8 ist mit den beiden Spriegeln fest verbunden. Die beiden Spriegel sind in zwei seitlichen mit der Fahrzeugkarosserie 21 verbundenen Führungsschienen 9 verschiebbar geführt. Die beiden Führungsschienen erstrecken sich entlang der Seitenränder des Fahrzeugdachs 3 und entlang einem Teil der Seitenränder der Windschutzscheibe 4.

Mit dem vorderen Spriegel 7 ist ein Griff 10 verbunden. Mittels dieses Griffs 10 lässt sich der Sonnenschutz 8 nach hinten bzw. nach vorne verschieben. Im Weiteren sind am vorderen Spriegel 7 zwei Sonnenblenden 11 angebracht. Die im Bereich der Beifahrerseite befindliche Sonnenblende 11 ist in ihrer nach unten geklappten Stellung veranschaulicht, die auf der Fahrerseite befindliche Sonnenblende 10 ist nach hinten hochgeklappt und liegt flächig an der Unterseite des vorderen Spriegels 7 an.

In der Figur 1 ist ergänzend das Lenkrad mit der Bezugsziffer 12, die hintere Sitzbank mit der Bezugsziffer 13 und eine an der Unterseite des Dachhimmels 14 befindliche Leuchte 15 bezeichnet. An der Windschutzscheibe 4 ist ein Rückspiegel 16 befestigt. In Figur 2 ist mit der Bezugsziffer 22 die Armaturentafel, mit 23 die A-Säule bezeichnet.

Die Figuren 1 bis 4 verdeutlichen die Lagerung der jeweiligen Sonnenblende 11 sowie der auf der Beifahrerseite angeordneten Dachhaltegriffe, die entsprechend auch auf der Fahrerseite angeordnet sind. Veranschaulicht ist ein vorderer Dachhaltegriff 17 für den Fahrer bzw. den Beifahrer und ein hinterer Dachhaltegriff 18 für die im Fond sitzenden Insassen. Im erfindungsgemäßen Sinne ist nur der jeweilige vordere Dachhaltegriff 17 von Bedeutung.

Der Dachhaltegriff 17 ist um eine Karosserieseitig befestigte Achse 19 schwenkbar gelagert und in bekannter Art und Weise mittels einer nicht dargestellten Feder in die in Figur 3 veranschaulichte Nichtgebrauchsstellung vorgespannt, in der er, ausgehend von der Achse 19, über einen Teilbereich am Dachhimmel 14 in dessen seitlichem Bereich anliegt. In der Gebrauchsstellung nimmt der Dachhaltegriff 17 eine Position ein, in der er, ausgehend von der Achse 19 nach unten gerichtet ist. Die jeweilige Sonnenblende 11 ist um eine im Wesentlichen horizontale, quer zur Längsachse des Kraftfahrzeugs 2 angeordnete Achse 20 schwenkbar im vorderen Spriegel 7 gelagert. In der Figur 4 ist mit durchgezogener Linie die nach unten geklappte Sonnenblende 11, mit strichlierter Linie die in ihrer nach oben geklappten Ruhelage befindliche Sonnenblende 11 veranschaulicht.

Bei geschlossenem, das heißt vorgeschobenem Beschattungssystem 1 und damit vorgeschobenem Sonnenschutz 8, wie er insbesondere in Figur 2 durch die Position A verdeutlicht ist, befinden sich die Sonnenblenden 11 vor dem zugeordneten Dachhaltegriff 17 und können ohne Einschränkung von der Nichtgebrauchslage in die Gebrauchslage geklappt werden. Befindet sich die jeweilige Sonnenblende 11 in der nach oben geklappten Position gemäß Figur 4, liegt sie in Fahrzeughöhe oberhalb des in der Position gemäß Figur 3 befindlichen Dachhaltegriffs 17. Infolge dessen kann das Beschattungssystem 1 ohne Behinderung verschoben werden.

Lediglich bei heruntergeklappter Sonnenblende 11 besteht beim Verschieben des Beschattungssystems 1 eine Überschneidung, und zwar in Querrichtung, zwischen der Sonnenblende 11 und dem in der Position gemäß Figur 3 befindlichen Dachhaltegriff 17. Dadurch wird beim Verschieben des Beschattungssystems von der Position A in die Position B die Sonnenblende durch den Dachhaltegriff 17 nach oben geklappt, und zwar in Richtung nach vorne, wie es der Darstellung der Figur 2 zu entnehmen ist. Dieser Klappvorgang geht deshalb vonstatten, weil der Anlagepunkt des Dachhaltegriffs 17 einen Hebelarm zur Achse 20 der Sonnenblende 11 besitzt.

Grundsätzlich könnte die Konstruktion auch so ausgeführt sein, dass der Dachhaltegriff 17 die Verschiebung des Beschattungssystems 1 blockiert. Dies wäre beispielsweise dann der Fall, wenn der Anlagepunkt auf Höhe bzw. nahe der Klappachse der Sonnenblende liegen würde.

### Bezugszeichenliste

- Beschattungssystem: 1
- Kraftfahrzeug: 2
- Fahrzeugdach: 3
- Windschutzscheibe: 4
- B-Säule: 5
- Beifahrertür: 6
- vorderer Spriegel: 7
- Sonnenschutz: 8

- Führungsschiene: 9
- Griff: 10
- Sonnenblende: 11
- Lenkrad: 12
- Sitzbank: 13
- Dachhimmel: 14
- Leuchte: 15
- Rückspiegel: 16
- Dachhaltegriff: 17
- Dachhaltegriff: 18
- Achse: 19
- Achse: 20
- Fahrzeugkarosserie: 21
- Armaturentafel: 22
- A-Säule: 23

## Patentansprüche

1. Kraftfahrzeug (2) mit verschiebbarem Beschattungssystem (1) und an diesem angebrachter Sonnenblende (11), wobei das Beschattungssystem (1) in Längsrichtung des Fahrzeugs (2) in stationären Führungsschienen (9) verschiebbar gelagert ist, und im vorderen Bereich des Beschattungssystems (1), zumindest auf der Fahrerseite des Kraftfahrzeugs (2) die Sonnenblende (11) angeordnet ist, die um eine im wesentlichen horizontale, quer zur Längsachse des Kraftfahrzeugs (2) angeordnete Achse (20) schwenkbar im Beschattungssystem (1) gelagert ist und aus einer im wesentlichen horizontalen Nichtgebrauchslage nach unten in eine Gebrauchslage schwenkbar ist, **dadurch gekennzeichnet, dass** mit der Fahrzeugkarosserie (21) ein Element (17) verbunden ist, das, beim Verschieben des Beschattungssystems (1) aus seiner vorderen Endstellung, in den Weg der in Gebrauchslage befindlichen Sonnenblende (11) ragt.

2. Kraftfahrzeug nach Anspruch 1, **dadurch gekennzeichnet, dass** das Element (17) die in Gebrauchslage befindliche Sonnenblende (11) nach oben klappt.

3. Kraftfahrzeug nach Anspruch 1, **dadurch gekennzeichnet, dass** das Element (17), bei Kontakt mit der in Gebrauchslage befindlichen Sonnenblende (11), einen Anschlag für das Beschattungssystem (1) bildet.

4. Kraftfahrzeug nach einem der Ansprüche 1 bis 3, **dadurch gekennzeichnet, dass** das Element (17) durch einen seitlichen Dachhaltegriff, insbesondere einen im Bereich der Beifahrerseite angeordneten Dachhaltegriff gebildet ist.

5. Kraftfahrzeug nach einem der Ansprüche 1 bis 4, **dadurch gekennzeichnet, dass** es eine Frontscheibe (4) aufweist, die sich bis zur B-Säule (5) des Fahrzeugs erstreckt.

## Claims

1. A motor vehicle (2), comprising a movable shading system (1) and a sun visor (11) attached to said shading system (1), with the shading system (1) being movably held in the longitudinal direction of the vehicle (2) in stationary guide rails (9), and the sun visor (11) is arranged in the front region of the shading system (1), at least on the driver's side of the motor vehicle (2), which sun visor (11) is swivellably mounted in the shading system (1) around a substantially horizontal axis (20) arranged transversally to the longitudinal axis of the motor vehicle (2) and can be swivelled downwardly from a substantially horizontal idle position to a position of use, **characterized in that** an element (17) is connected with the vehicle body (21), which element (17), during the displacement of the shading system (1) from its front end position, protrudes into the path of the sun visor (11) which is in the position of use.

2. A motor vehicle according to claim 1, **characterized in that** the element (17) flips up the sun visor (11) which is in the position of use.

3. A motor vehicle according to claim 1, **characterized in that** the element (17), when it comes into contact with the sun visor (11) which is in the position of use, forms a limit stop for the shading system (1).

4. A motor vehicle according to one of the claims 1 to 3, **characterized in that** the element (17) is formed by a lateral roof grab handle, especially a roof grab handle arranged in the region of the passenger side.

5. A motor vehicle according to one of the claims 1 to 4, **characterized in that** it comprises a front windowpane (4) which extends up to the B-pillar (5) of the vehicle.

## Revendications

1. Véhicule à moteur (2) avec un système d'occultation (1) mobile et un pare-soleil (11) monté sur celui-ci, dans lequel le système d'occultation (1) est supporté avec possibilité de translation dans le sens longitudinal du véhicule à moteur (2) dans des rails de guidage (9) stationnaires, et le pare-soleil (11) est disposé dans la partie antérieure du système d'occultation (1), au moins du côté du conducteur du véhicule à moteur (2) et supporté dans le système d'occultation (1) avec possibilité de pivotement autour d'un axe (20) sensiblement horizontal, disposé perpendiculairement à l'axe longitudinal du véhicule à moteur (2), et peut pivoter vers le bas dans la position d'utilisation à partir d'une position de non-utilisation sensiblement horizontale, **caractérisé en ce qu'**un élément (17) qui dépasse dans le trajet du pare-soleil (11) se trouvant dans sa position d'utilisation lors du déplacement du système d'occultation (1) à partir de sa position de fin de course antérieure est assemblé à la carrosserie (21) du véhicule.

2. Véhicule à moteur selon la revendication 1, **caractérisé en ce que** l'élément (17) rabat vers le haut le pare-soleil (11) qui se trouve dans sa position d'utilisation.

3. Véhicule à moteur selon la revendication 1, **caractérisé en ce que** l'élément (17) forme, en cas de contact avec le pare-soleil (11) qui se trouve dans sa position d'utilisation, une butée pour le système d'occultation (1).

4. Véhicule à moteur selon l'une des revendications 1 à 3, **caractérisé en ce que** l'élément (17) est formé par une poignée latérale de maintien au toit, en particulier une poignée de maintien au toit disposée du côté du passager.

5. Véhicule à moteur selon l'une des revendications 1 à 4, **caractérisé en ce qu'**il possède un pare-brise (4) qui s'étend jusqu'au montant B (5) du véhicule.
